# FASCICULE DE BREVET EUROPEEN

(11) **EP 3 865 724 B1**
(45) Date de publication et mention de la délivrance du brevet: **10.05.2023**
(21) Numéro de dépôt: 21156218.6
(22) Date de dépôt: 10.02.2021
(51) Int. Cl.: F16C 41/00, F16C 19/06, G01P 3/44, G01P 1/02, F16C 25/08

(54) **PORTE-CAPTEUR MONOBLOC INTEGRANT UN ORGANE ELASTIQUE DE PRECHARGE AXIALE ET DISPOSITIF DE PALIER A ROULEMENT INSTRUMENTE COMPRENANT UN TEL PORTE-CAPTEUR**
EINTEILIGEN SENSORHALTER UND ELASTISCHEN ELEMENT ZUR AXIALLEN VORSPANNUNG UND AUSGERÜSTEDE WÄLZLAGERVORRICHTUNG MIT EINEM SOLCHEN SENSORHALTER
ONE PIECE SENSOR RETAINER WITH AN ELASTIC ELEMENT FOR AXIAL PRELOAD AND EQUIPPED ROLLING BEARING ASSEMBLY COMPRISING SUCH A SENSOR RETAINER

(30) Priorité: 11.02.2020 FR 2001348
(43) Date de publication de la demande: 18.08.2021
(73) Titulaire: NTN-SNR ROULEMENTS, 74000 Annecy (FR)
(72) Inventeur: CHARVET-QUEMIN, Jean-François, 74230 DINGY SAINT CLAIR (FR); DURET, Christophe, 74290 BLUFFY (FR); PALLANCHARD, Vincent, 74000 ANNECY (FR)
(74) Mandataire: Alatis

(56) Documents cités:
- FR-A1- 2 740 186
- FR-A1- 2 836 191

## Description

### DOMAINE TECHNIQUE DE L'INVENTION

L'invention concerne, de façon générale, le domaine technique des paliers à roulement instrumentés du type comprenant un ensemble capteur-codeur pour la détection d'au moins un paramètre de rotation du roulement.

L'invention se rapporte plus spécifiquement à un porte-capteur pour un dispositif de palier à roulement instrumenté et un dispositif de palier à roulement instrumenté comportant un tel porte-capteur.

### ÉTAT DE LA TECHNIQUE ANTÉRIEURE

On connaît de l'art antérieur des roulements équipant des paliers pour supporter un arbre tournant, de tels roulements comprenant généralement une bague de roulement tournante, une bague de roulement non tournante, et des corps roulants logés dans un volume annulaire entre les deux bagues de roulement et roulant sur des chemins de roulement annulaires formés sur les deux bagues de roulement de manière à permettre une rotation relative entre les deux bagues de roulement autour d'un axe de référence, et donc une rotation relative de l'arbre tournant supporté par une partie non tournante.

De tels paliers à roulement trouvent des applications dans de nombreux domaines tels que ceux des moteurs électriques, en particulier dans le domaine automobile, où cesdits paliers forment des supports permettant d'assurer une liaison mécanique entre un arbre tournant et un carter de moteur électrique.

Il est également connu d'équiper de tels paliers d'un ensemble capteur-codeur, le capteur non tournant permettant de détecter un signal émis par un codeur solidaire de la partie tournante afin de pouvoir mesurer au moins un paramètre de rotation. La bague fixe est alors montée dans un alésage d'une partie fixe de façon à autoriser un déplacement axial relativement à la partie fixe. Pour maintenir le roulement en position, et donc pour garantir un parfait positionnement du capteur par rapport au codeur tout en reprenant les éventuelles vibrations appliquées sur les paliers, ou déplacements consécutifs aux variations de température ou de contraintes, une force axiale est appliquée sur le roulement au moyen d'une pièce rapportée élastiquement déformable telle qu'une rondelle.

Un tel palier nécessite, pour le constructeur automobile, de gérer, manipuler et assembler un grand nombre de pièces. L'assemblage comme la maintenance sont donc complexes. De même, la chaîne de cote entre le capteur et le codeur d'un tel palier est également complexe et impose, notamment, des entrefers de lecture plus importants. FR 2 740 186 A1 divulgue un porte-capteur suivant le préambule de la revendication 1.

### EXPOSE DE L'INVENTION

L'invention vise à remédier à tout ou partie des inconvénients de l'état de la technique en proposant notamment un dispositif de palier à roulement instrumenté à la fois simple à fabriquer et à utiliser, sans nuire à la précision des mesures.

Pour ce faire est proposé, selon un premier aspect de l'invention un porte-capteur monobloc pour un dispositif de palier à roulement instrumenté, le porte-capteur présentant une interface de fixation pour supporter un capteur de rotation pour détecter un signal émis par un codeur solidaire d'une partie tournante autour d'un axe de rotation de référence pour la détermination d'au moins un paramètre de rotation, le porte-capteur comprenant un premier ensemble d'une ou plusieurs parois d'appui orientées suivant une direction axiale dans un premier sens et tangentes à un premier plan de contact perpendiculaire à la direction axiale, et un deuxième ensemble d'une ou plusieurs parois d'appui orientées suivant la direction axiale dans un deuxième sens, opposé au premier sens, et tangentes à un deuxième plan de contact perpendiculaire à la direction axiale et parallèle au premier plan, le porte-capteur comprend par ailleurs au moins un organe élastique de mise en précharge axiale du palier à roulement, ledit organe élastique étant apte à se déformer élastiquement pour permettre un rapprochement du premier plan et du deuxième plan. Le porte-capteur étant remarquable en en ce qu'il comporte en outre une jupe annulaire intérieure comprenant l'interface de fixation pour supporter le capteur de rotation.

Grâce à une telle combinaison de caractéristiques, le porte-capteur est formé d'un seul tenant avec les premier et deuxième ensembles d'une ou plusieurs parois d'appui et avec l'organe élastique. Une telle pièce monobloc permet donc d'assurer à la fois la fonction de support du capteur, mais aussi la fonction d'application d'une précharge au dispositif de palier à roulement, en particulier la force axiale pour garantir le maintien du palier à roulement en position. Un tel porte-capteur est également distinct des bagues du roulement ce qui permet son remplacement de façon indépendante lors des opérations de maintenance. L'organe élastique étant apte à se déformer élastiquement pour permettre rapprochement du premier plan et du deuxième plan, une telle configuration autorise l'application d'un effort de compression axial par l'organe élastique lorsque le porte-capteur est soumis à une précharge ou précontrainte de manière à appliquer une précharge sur un roulement lorsqu'il est intégré dans un dispositif de palier à roulement. De plus, une telle jupe annulaire offre une interface simple à fabriquer et pratique pour l'utilisateur en cas de maintenance.

Le capteur est destiné à être positionné à une distance de lecture en face, de préférence axialement, du codeur et peut inclure une ou plusieurs têtes de lecture aptes à lire une grandeur variable optique ou électromagnétique engendrée au passage du codeur. En pratique, on pourra choisir un capteur à effet hall. Le codeur porte une ou plusieurs pistes de lecture, dont de préférence au moins une piste de lecture annulaire, aptes à générer, lorsque la partie tournante tourne, une variation d'une grandeur optique ou électromagnétique lue par le capteur. Bien entendu, d'autres capteurs pourront être utilisés en fonction des applications souhaitées.

Suivant un mode de réalisation, l'organe élastique est configuré pour travailler élastiquement en compression pour appliquer sur le roulement une précharge axiale, comprise de préférence entre 50 et 1000 N. Une telle contrainte nous assure, en particulier pour des applications aux moteurs électriques dans un véhicule automobile, l'application d'une force axiale prédéterminée satisfaisante sur le roulement malgré d'éventuelles vibrations ou variations dimensionnelles à la suite d'un échauffement.

De préférence, l' interface de fixation est configurée pour assurer une fixation amovible en association avec une interface de fixation complémentaire solidaire du capteur.

Suivant un mode de réalisation, le porte-capteur comporte une jupe annulaire extérieure configurée pour coopérer avec un alésage intérieur de la partie non tournante de sorte à assurer son alignement axial suivant l'axe de référence. Une telle jupe annulaire extérieure permet à la fois de renforcer le porte-capteur, tout en assurant une fonction de centrage du porte-capteur par rapport à l'axe de référence. Inversement, dans le cas où la bague tournante est la bague extérieure, on pourra prévoir que la jupe annulaire inférieure assure le centrage du porte-capteur sur un axe non tournant.

Suivant un mode de réalisation, l'un au moins des deux ensembles constitués par le premier et le deuxième ensembles d'au moins une paroi d'appui, de préférence les premier et deuxième ensembles, est porté par une enveloppe annulaire. De préférence, l'un au moins des deux ensembles constitués par le premier et le deuxième ensemble d'au moins une paroi d'appui est radialement bordé intérieurement par la jupe annulaire intérieure et/ou bordé extérieurement par la jupe annulaire extérieure. L'enveloppe annulaire des premier et deuxième ensembles d'au moins une paroi d'appui est contenue radialement entre les jupes annulaires intérieure et extérieure.

Suivant un mode de réalisation, le porte-capteur comprend au moins un moyen d'indexation angulaire par rapport à la partie non tournante, le moyen d'indexation angulaire comportant de préférence au moins une saillie radiale par rapport à la jupe annulaire extérieure, par exemple formée à partir d'une découpe de la jupe annulaire extérieure.

Dans ce cas, les organes élastiques comprennent des lamelles élastiquement déformables, les premier et deuxième ensembles d'au moins une paroi d'appui étant reliés ensemble par les lamelles élastiquement déformables.

Suivant une variante préférée, l'un des deux ensembles d'au moins une paroi d'appui comporte une paroi principale d'appui sensiblement annulaire s'étendant de façon continue ou discontinue sur la circonférence du porte-capteur pour conférer une stabilité du porte-capteur dans le dispositif de palier à roulement, les lamelles élastiques étant solidaire d'une plaque support de cette paroi principale d'appui par une extrémité proximale formant base. Les lamelles élastiques s'étendant suivant au moins une composante axiale par rapport à cet élément plan du côté opposé à la paroi principale d'appui jusqu'à leurs extrémités distales. Une telle configuration, simple, efficace et dont on maîtrise les paramètres mécaniques sous une précharge, correspond à un premier ensemble d'une ou plusieurs parois d'appui comprenant notamment la paroi principale d'appui, orientée axialement dans un premier sens et tangent à un premier plan de contact perpendiculaire à la direction axiale, c'est-à-dire un plan de contact transversal ou s'étendant radialement par rapport à l'axe de référence. Le deuxième ensemble d'une ou plusieurs parois d'appui est formé par l'ensemble des parois d'appui ou surfaces d'appui des extrémités distales des lamelles élastiques, ces parois d'appui étant orientées axialement dans un deuxième sens, opposé au premier sens, et tangentes à un deuxième plan de contact perpendiculaire à la direction axiale et parallèle au premier plan, c'est-à-dire tangentes à un plan de contact transversal ou s'étendant radialement par rapport à l'axe de référence.

Suivant un mode de réalisation, les organes élastiques sont formés à partir d'au moins une déformation et/ou découpe pratiquée dans au moins une plaque supportant l'un des deux ensembles de paroi(s) d'appui. Une telle configuration est particulièrement facile à fabriquer et peu onéreuse. En outre, elle n'impacte pas de façon significative le nombre d'étapes à mettre en oeuvre dans le procédé de fabrication du porte-capteur. En outre, une telle opération de fabrication des organes élastiques peut être réalisée en temps masqué dans le procédé de fabrication du porte-capteur.

Suivant un mode de réalisation, les lamelles élastiques sont formées à partir de découpes pratiquées dans au moins une plaque formant support de l'un des deux ensembles d'au moins une paroi d'appui, à partir de laquelle chacune des lamelles élastiques est solidaire par une base, l'autre des deux ensembles d'au moins une paroi d'appui étant constitué par des surfaces supportées par les extrémités distales desdites lamelles élastiques, opposées à leurs bases.

Suivant un autre aspect de l'invention, celle-ci a trait à un dispositif de palier à roulement instrumenté, comportant :
- une partie tournante comprenant une bague de roulement tournante, une partie non tournante comprenant une bague de roulement non tournante et des corps roulants logés dans un volume annulaire entre les deux bagues de roulement et aptes à rouler sur des chemins de roulement annulaires formés sur les deux bagues de roulement de manière à permettre une rotation relative entre les deux bagues de roulement autour d'un axe de référence;
- un capteur de rotation pour détecter un signal émis par un codeur solidaire de la partie tournante pour la détermination d'au moins un paramètre de rotation ;
- un porte-capteur selon la revendication 1.

Grâce à une telle combinaison de caractéristiques, la précharge appliquée sur le palier à roulement grâce aux organes élastiques du porte-capteur permet de garantir un entrefer constant entre le capteur et le codeur lors leur utilisation. De plus, la jupe annulaire d'un tel porte-capteur offre une interface simple à fabriquer et pratique pour l'utilisateur en cas de maintenance.

Suivant un mode de réalisation, les corps roulants sont configurés pour transmettre un effort axial, les corps roulants comprenant de préférence des billes ou des rouleaux coniques.

Suivant un mode de réalisation, le roulement est interposé radialement entre une extrémité d'un arbre tournant et un alésage intérieur de la partie non tournante, l'alésage présentant une ouverture extérieure débouchante vers l'extérieur, d'un côté opposé à un côté recevant l'arbre tournant.

Suivant un mode de réalisation, le porte-captateur est interposé axialement entre la bague non tournante et un carter rapporté de la partie non tournante, le carter rapporté étant configuré de préférence pour fermer l'ouverture extérieure de l'alésage.

Suivant un mode de réalisation, le porte-capteur comprend au moins un moyen d'indexation angulaire par rapport à la partie non tournante, de préférence formé par au moins une saillie radiale coopérant dans une rainure axiale de l'alésage. De cette manière, on assure la solidarisation angulaire par rapport à la partie non tournante du porte-capteur de façon relativement simple. Dans une configuration avantageuse, le dispositif de palier à roulement instrumenté comprend un connecteur reliant le capteur à au moins un câble configuré pour être relié à une unité électronique de traitement des signaux, le moyen d'indexation angulaire comprenant le connecteur. Un tel moyen d'indexation peut être alternatif ou complémentaire d'au moins une saillie radiale formée par exemple sur la jupe annulaire extérieure.

Suivant un mode de réalisation, le dispositif de palier à roulement instrumenté comporte une jupe annulaire intérieure comprenant l'interface de fixation pour supporter le capteur, le capteur s'étendant de préférence suivant un secteur angulaire supérieur à 180°. Une telle caractéristique permet de garantir le centrage du capteur par rapport au porte-capteur, en particulier par rapport à la jupe intérieure, au moins en partie annulaire.

Suivant un mode de réalisation, le dispositif de palier à roulement instrumenté comporte au moins deux capteurs ou, de manière générale, deux éléments sensibles, configurés pour être portés ensemble par un même porte-capteur, ce qui permet une redondance des mesures par sécurité.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue en coupe axiale d'un dispositif de palier à roulement instrumenté suivant un premier mode de réalisation ;
[Fig. 2A] : une vue d'un porte-capteur selon ce premier mode de réalisation ;
[Fig. 2B] : une vue d'un porte-capteur selon ce premier mode de réalisation muni d'un capteur ;
[Fig. 3] : une vue d'un porte-capteur selon un deuxième mode de réalisation ;
[Fig. 4] : une vue d'un porte-capteur selon un troisième mode de réalisation ;
[Fig. 5] : une vue d'un porte-capteur muni d'un capteur suivant un quatrième mode de réalisation ;
[Fig. 6] : une vue d'un porte-capteur muni d'un capteur suivant un cinquième mode de réalisation.

Pour plus de clarté, les éléments identiques ou similaires sont repérés par des signes de référence identiques sur l'ensemble des figures.

### DESCRIPTION DÉTAILLÉE D'UN MODE DE RÉALISATION

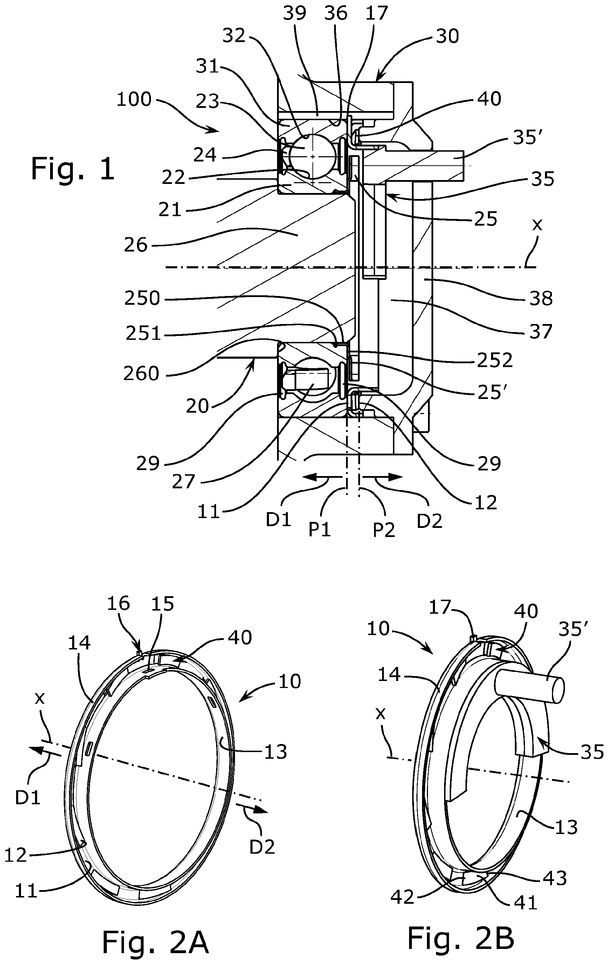

Sur les figures 1, 2A et 2B est illustré un dispositif de palier à roulement instrumenté **100,** comportant une partie tournante **20** autour d'un axe de référence **X** et supportée par une partie non tournante **30.** Une liaison pivot est assurée par un roulement comprenant une bague de roulement tournante **21,** une bague de roulement non tournante **31** et des corps roulants **23** logés dans un volume annulaire **24** entre les deux bagues de roulement **21, 31** et aptes à rouler sur des chemins de roulement **22, 32** annulaires formés sur les deux bagues de roulement **21, 31** de manière à permettre une rotation relative entre les deux bagues de roulement **21, 31** autour de l'axe de référence **X.** Les corps roulants sont ici des billes permettant, grâce à une section en partie enveloppante des chemins de roulement **22, 32,** de transmettre un effort axial. Les billes **23** sont lubrifiées et maintenues dans un environnement étanche grâce à deux dispositifs d'étanchéité **29** fermant axialement le volume annulaire **24** de part et d'autre axialement des chemins de roulement **22, 32,** et radialement entre les deux bagues de roulement **21, 31.** De tels dispositifs d'étanchéité **29** peuvent être utilisés en combinaison avec une lubrification à la graisse par exemple. On peut aussi utiliser une lubrification à l'huile sans devoir fermer le volume annulaire **24** par un dispositif d'étanchéité **29.** Les billes **23** sont maintenues espacées par une cage **27.**

Le dispositif de palier à roulement **100** est instrumenté, c'est-à-dire qu'il comprend un ensemble capteur-codeur, et en particulier un capteur **35** de rotation pour détecter un signal émis par un codeur **25** solidaire de la partie tournante **20** pour la détermination d'au moins un paramètre de rotation, tel qu'une vitesse de rotation, une accélération et/ou une position angulaire comme la position des pôles du rotor par rapport à celle du stator.

Le capteur **35** fixe, solidaire de la partie non tournante **30,** est destiné à être positionné à une distance de lecture en face axialement du codeur **25.** Le capteur **35** comporte une ou plusieurs têtes de lecture (non illustrées) aptes à lire une grandeur variable optique ou électromagnétique engendrée par le défilement du codeur **25.** Le codeur **25** équipe la partie tournante et porte une ou plusieurs pistes de lecture (non illustrées), dont de préférence au moins une piste de lecture annulaire, aptes à générer, lorsque la partie tournante tourne, une variation d'une grandeur optique ou électromagnétique lue par le capteur **35.**

En pratique, on choisira un capteur **35** à effet hall. Il s'agit d'un capteur **35** magnéto sensible délivrant une tension de sortie analogique proportionnelle à une grandeur optique ou électromagnétique produite par le codeur **25** ou variant à chaque changement de polarité de la bague du codeur **25** et délivrant ainsi un signal caractéristique de type carré. Dans ce cas, le codeur **25** est choisi pour coopérer avec un tel capteur **35** et peut être du type magnétique et se présenter sous la forme d'une bague multipolaire dont le nombre de pôles dépend généralement du nombre de pôles du moteur à piloter ou de la précision que l'on souhaite atteindre.

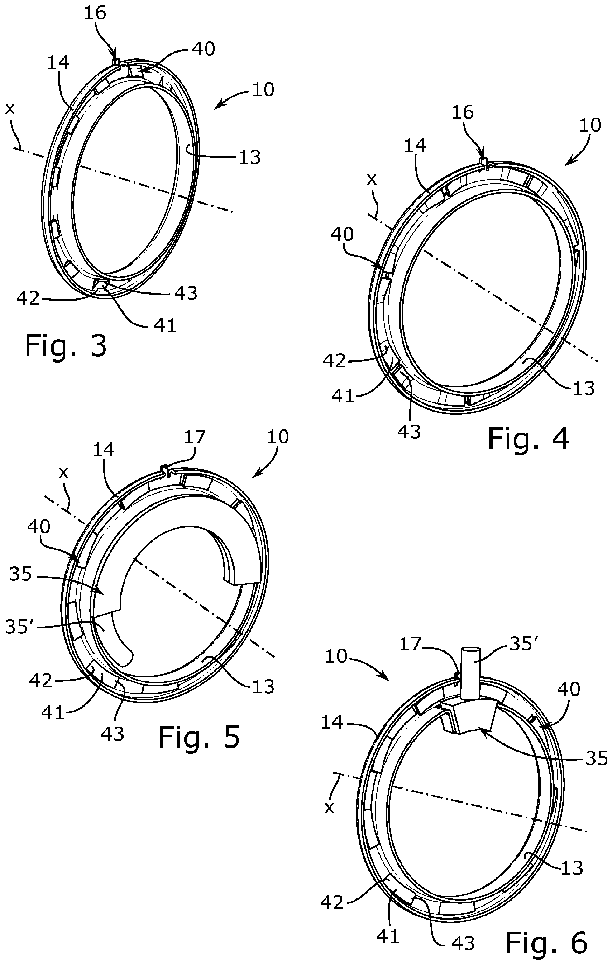

Un connecteur **35'** et un câble relient le capteur **35** fixe à une unité électronique (non illustrée) qui analyse et exploite en permanence le signal provenant du capteur **35.** Le connecteur **35'** peut s'étendre de manière axiale (voir les figures 2A et 2B), mais peut être positionné de manières différentes selon les contraintes d'encombrement. Par exemple, le connecteur **35'** peut s'étendre de manière circonférentielle suivant un secteur angulaire, de préférence contenu dans l'espace délimité par le porte-capteur **10,** en particulier dans l'espace intérieur délimité par l'enveloppe cylindrique de la jupe annulaire intérieure **13** (voir la figure 5), ou peut être disposé radialement (voir la figure 6).

Le capteur **35** est solidarisé à un porte-capteur **10** monobloc, c'est-à-dire formé d'un seul tenant, présentant une interface de fixation **15** pour supporter le capteur **35.** Le porte-capteur **10** comprend :
- un premier ensemble d'une ou plusieurs parois d'appui **11** orientées axialement dans un premier sens **D1** et tangentes à un premier plan de contact **P1** perpendiculaire à l'axe de référence **X,** et
- un deuxième ensemble d'une ou plusieurs parois d'appui **12** orientées axialement dans un deuxième sens **D2,** opposé au premier sens **D1,** et tangentes à un deuxième plan de contact **P2** perpendiculaire à l'axe de référence **X** et parallèle au premier plan **P1.**

Plus précisément, le porte-capteur **10** présente une forme globalement annulaire, présentant une section radiale en forme de « U » comportant :
- le premier ensemble de paroi(s) d'appui **11,** en particulier une paroi principale d'appui orientée axialement dans un premier sens **D1** et tangente au premier plan de contact **P1** perpendiculaire à la direction axiale ;
- une jupe annulaire intérieure **13,** comprenant ici l'interface de fixation **15** pour supporter le capteur **35** de rotation, et
- une jupe annulaire extérieure **14** configurée pour coopérer avec un alésage intérieur **36** de la partie non tournante **30** de sorte à assurer son alignement axial suivant l'axe de référence **X.**

Chacune des deux jupes annulaires intérieure **13** et extérieure **14** s'étendent axialement, de sorte à être sensiblement cylindriques, et sont disposées de manière concentrique par rapport à l'axe de référence **X.** Selon les variantes, ces parois **11, 13, 14** peuvent être continues ou discontinues. La jupe annulaire intérieure **13** et la jupe annulaire extérieure **14** encadrent radialement, ou bordent circonférentiellement, la paroi principale d'appui **11.** La paroi principale d'appui **11** du premier ensemble est configurée pour venir en appui surfacique axialement contre la bague non tournante **31** du roulement, correspondant ici à la bague radialement extérieure **31** dudit roulement. La résultante des forces de la paroi principale d'appui **11** sur la bague non tournante **31** est orientée dans le premier sens **D1.** Une telle configuration de la paroi principale d'appui **11** permet d'obtenir une stabilité de l'appui du porte-capteur **10** sur le palier à roulement, l'appui étant réparti circonférentiellement.

Le porte-capteur **10** monobloc comprend au moins un organe élastique **40** de mise en précharge axiale du palier à roulement, les organes élastiques **40** comprennent une pluralité de lamelles élastiquement déformables **41.** Les lamelles élastiques **41** sont équiréparties suivant la circonférence du porte-capteur **10.** Lesdites lamelles élastiques **41** présentent chacune selon une variante un corps s'étendant suivant la circonférence du porte-capteur et suivant un secteur angulaire prédéterminé à partir d'une extrémité proximale formant une base **42** avec une plaque support de la paroi principale d'appui **11,** jusqu'à une extrémité distale **43** (voir les figures 1, 2A, 2B, et 4 à 6). Les lamelles élastiques **41** s'étendent suivant au moins une composante axiale parallèle à l'axe de référence **X,** et dans un sens **D2** opposé au sens **D1** de manière à ce que l'extrémité distale **43** de chaque lamelle élastique **41** soit distante axialement de sa base **42,** du côté opposé de sa paroi d'appui **11.**

Chacune des lamelles élastiques **41** présente, à son extrémité distale, une paroi **12** orientée axialement dans le deuxième sens **D2,** chacune des parois **12** étant à la fois tangente au deuxième plan de contact **P2** et parallèle au premier plan **P1**. Ces parois **12** du deuxième ensemble sont disjointes et supportées par les extrémités distales **43** distinctes de manière à être coplanaires, c'est-à-dire contenues dans un même plan transversal par rapport à l'axe de référence **X,** à savoir le deuxième plan de contact **P2.** Dans une telle configuration, les premier et deuxième ensembles d'au moins une paroi d'appui **11, 12** sont reliés ensemble par les lamelles élastiquement déformables **41,** les premier et deuxième plans de contact **P1, P2** présentant un écartement variable suivant l'élasticité intrinsèque du porte-capteur **10** monobloc assurée par les organes élastiques **40.**

Dans cette variante, les organes élastiques **40** sont tous formés à partir d'une découpe pratiquée dans la plaque supportant la paroi principale d'appui **11** du premier ensemble. Cette plaque est ici plane mais elle pourrait varier dans sa conception (ondulations, discontinuités, etc.). Il résulte de ces découpes que la paroi principale d'appui **11** est ajourée au droit de chacun des organes élastiques **40** créant localement des trous traversants dans ladite paroi principale d'appui **11.** Ces trous s'étendent radialement en étant délimités par une projection axiale de chacune des lamelles élastiques **41** sur la paroi principale d'appui **11** formant localement des discontinuités dans la paroi principale d'appui **11.** On choisira une épaisseur de plaque supportant la paroi principale d'appui **11** suffisamment grande pour que les organes élastiques **40** formés à partir de ladite plaque de support par une simple découpe, et de déformation par une opération de pliage, présente une élasticité suffisante pour la précharge souhaitée, mais une épaisseur suffisamment faible pour que lesdits organes élastiques **40** ne soient pas trop rigides et garantissent l'élasticité recherchée. Le matériau choisi doit également garantir une durée de vie satisfaisante au porte-capteur, et résister à des contraintes minimales en matière de casse, perte d'élasticité, fluage, etc.

De façon générale, les organes élastiques **40** sont configurés pour se déformer élastiquement pour permettre un rapprochement du premier plan **P1** et du deuxième plan **P2** autorisant ainsi l'application d'un effort de compression axial par les organes élastiques **40** lorsque le porte-capteur **10** génère une précharge sur le roulement. Pour l'application dans le domaine des paliers de moteurs électriques utilisés dans l'automobile, les organes élastiques **40** sont configurés pour travailler élastiquement en compression lorsqu'ils appliquent une précharge axiale sur le roulement supérieure ou égale à 50N, de préférence encore supérieure ou égale à 100N, et/ou inférieure à 1000N, de préférence encore inférieure à 500N.

Le roulement à billes **23** est disposé axialement d'un côté en butée contre un épaulement **260** de l'arbre **26,** au niveau de sa bague intérieure **21** annulaire frettée sur une extrémité de l'arbre **26.** De l'autre côté axialement, est fixé une armature **25'** formant porte-codeur, présentant une jupe annulaire **250** globalement cylindrique interposée entre la bague tournante **21** ou bague intérieure du roulement, et une surface extérieure cylindrique de l'arbre **26,** la jupe annulaire **250** présentant un pied d'ancrage **251** saillant radialement vers l'extérieur et logée dans une rainure circonférentielle intérieure de la bague **21** de sorte à bloquer en translation le porte-codeur **25'.** Suivant une variante alternative et/ou complémentaire non illustrée, le pied d'ancrage peut être prévu pour être saillant vers l'intérieur et logé dans une rainure au moins en partie circonférentielle sur la surface extérieure cylindrique de l'arbre **26.** Le porte-codeur **25'** comporte également une collerette **252** annulaire s'étendant radialement, en contact d'un côté contre une surface d'extrémité axiale de la bague intérieure **21,** et présentant d'un autre côté axialement opposé à la bague intérieure **21,** une interface de fixation supportant le codeur **25.** La jupe annulaire **250** et la collerette **252** sont reliées par une portion coudée. Selon une autre variante non illustrée, le porte-codeur **25'** peut comporter également un moyen d'indexation sur l'arbre, comme une saillie radiale, un trou borgne ou traversant, ou des moyens de repérage permettant son montage angulaire correct sur l'arbre **26.** Les moyens d'indexation peuvent également servir à garantir une non reptation angulaire du porte-codeur **25'** par rapport à l'arbre **26.**

Le roulement est interposé radialement entre l'arbre **26** tournant et un alésage intérieur **36** de la partie non tournante **30.** L'alésage **36** présente une ouverture extérieure **37** débouchante vers l'extérieur, d'un côté opposé à un côté recevant l'arbre tournant **26.** L'alésage **36** est pourvu, sur sa périphérie, de trous taraudés configurés pour recevoir des vis de fixation réparties régulièrement sur le pourtour d'un carter rapporté **38** de la partie non tournante **30,** le carter rapporté **38** formant un bouchon de fermeture de l'espace intérieur dans lequel est logé le roulement instrumenté. Suivant une variante non illustrée, l'alésage **36** peut être muni, au moins à son entrée au niveau de l'ouverture extérieure **37,** d'un taraudage intérieur pour recevoir une portion filetée du carter rapporté **38,** la fermeture étant assurée par le vissage de sa portion cylindrique filetée dans le taraudage de l'alésage **36.**

Le carter rapporté **38** présente une paroi d'extrémité axiale annulaire contre laquelle vient en appui le porte-capteur **10,** notamment les extrémités distales **43** des lamelles élastiques **41.** Plus précisément, ce sont les parois d'appui **12** du deuxième ensemble de parois d'appui **12** du porte-capteur **10** qui sont en contact et en appui contre la paroi d'extrémité axiale annulaire du bouchon de fermeture **38** fixé de manière amovible à la partie non tournante **30.** La résultante des forces des parois d'appui **12** constituées par le extrémités distales **43** des lamelles élastiques **41** sur le carter rapporté **38** est orientée axialement dans le deuxième sens **D2,** opposé au premier sens **D1.** Une fermeture amovible permet un accès simple et rapide pour un opérateur lors des opérations de montage/démontage pour sa fabrication ou pour la maintenance du roulement ou du capteur.

Le porte-captateur **10** est interposé axialement entre la bague non tournante **31** du roulement, contre laquelle la paroi principale d'appui **11** est en contact et en appui, et le carter rapporté **38** sur la partie non tournante **30.** En maintenant une contrainte de compression entre les premier et deuxième ensembles de parois d'appui **11, 12,** ledit porte-capteur **10** génère une précharge axiale sur le roulement, l'élasticité des organes élastiques **40** autorisant le rapprochement élastique du premier plan **P1** et du deuxième plan **P2** lors de la précharge.

Le porte-capteur comprend également un moyen d'indexation angulaire **16** par rapport à la partie non tournante **30,** le moyen d'indexation angulaire **16** comportant une saillie radiale **17** par rapport à la jupe annulaire extérieure **14.** Cette saillie radiale **17** est formée à partir d'une découpe de la jupe annulaire extérieure **14.** Ladite saillie radiale **17** coopère dans une rainure axiale **39** de la surface cylindrique intérieure de l'alésage **36.**

Le capteur **35** est solidaire de manière amovible ou non du porte-capteur. L'interface de fixation **15** du ou des capteur(s) **35** est portée par la jupe annulaire extérieure **14** et comprend des orifices configurés pour recevoir une interface complémentaire du capteur **35** tel que des crochets élastiques ou clip. Le capteur **35** s'étendant de préférence suivant un secteur angulaire supérieur à 180° de manière à garantir le centrage du capteur **35** lui-même par rapport au porte-capteur **10,** en particulier par rapport à la jupe intérieure **13,** au moins en partie annulaire.

Dans les modes de réalisations illustrés sur les figures 2A, 2B, 5, et 6, on remarquera que les lamelles sont équiréparties circonférentiellement sur la paroi principale d'appui **11** et s'étendent chacune sur un secteur angulaire égal. Les lamelles élastiques **41** sont également orientées dans une même direction circonférentielle. Lors d'un rapprochement des plans de contact **P1** et **P2,** les lamelles élastiques pivotent chacune au niveau d'une articulation à sa base **42** formée par une portion coudée reliant la plaque supportant la paroi principale d'appui **11** et un corps de la lamelle élastique **41** associée. Dans ce mode de réalisation, la portion coudée de chaque lamelle élastique **41** guide un pivotement de ladite lamelle élastique **41** autour d'un axe d'articulation s'étendant radialement par rapport à l'axe de référence **X.** Une telle configuration apporte un appui stable et homogène du porte-capteur **10.**

D'autres configurations peuvent évidemment être envisagées. La figure 3, par exemple, illustre un mode de réalisation dans lequel la portion coudée de chaque lamelle élastique **41** guide un pivotement de ladite lamelle élastique **41** autour d'un axe d'articulation s'étendant circonférentiellement par rapport à l'axe de référence **X.** Dans ce mode de réalisation, les lamelles élastiques **41** nécessitent de s'étendre circonférentiellement sur un secteur angulaire réduit, de manière que l'arc formé par l'articulation présente une flèche la plus faible possible pour ne pas gêner la rotation. Au contraire, cet effet peut être habilement recherché pour que cette contrainte en pivotement conférée par la courbe en arc de l'articulation participe à garantir une élasticité rendant possible une précharge plus importante pour une épaisseur plaque de support de la paroi principale d'appui équivalente.

La figure 4 illustre un autre mode de réalisation dans lesquels les lamelles élastiques sont similaires à celles des figures 2A, 2B, 5, et 6, en ce qu'elles pivotent autour d'un axe d'articulation radial, mais elles sont orientées dans des directions circonférentielles opposées, et de façon alternée. Ainsi, sont équirépartis circonférentiellement dans ce mode de réalisation, des paires de lamelles élastiques **41,** chaque paire de lamelle élastique **41** comprenant une lamelle élastique **41** orientée dans une première direction circonférentielle, et une autre lamelle élastique **41** orientée dans une autre direction circonférentielle, opposée à la première. Les paires de lamelles élastiques **41** sont positionnées de sorte à être en vis-à-vis et que leurs extrémités distales **43** soient rapprochées. Les deux parois **12** d'une même paire d'organes élastiques sont donc rapprochées formant une zone d'appui de la paire de lamelles élastiques **41** en appui sur les deux lamelles élastiques **41.**

Le mode de réalisation illustré figure 6 diffère également des autres modes de réalisation en ce que le capteur **35** s'étend suivant un secteur angulaire inférieur à 180°, et même inférieur à 45°. Le dispositif de palier à roulement instrumenté comporte une jupe annulaire intérieure **13** comprenant l'interface de fixation pour supporter le capteur, l'interface de fixation étant formée à partie de découpes et de déformation de la jupe annulaire intérieure **13.**

Naturellement, l'invention est décrite dans ce qui précède à titre d'exemple. Il est entendu que l'homme du métier est à même de réaliser différentes variantes de réalisation de l'invention sans pour autant sortir du cadre de l'invention, qui est définie dans les revendications jointes.

Par exemple, le porte-capteur peut supporter plus d'un capteur, par exemple deux.

Les organes élastiques peuvent également présenter des configurations et structures différentes de celles des lamelles élastiques. Des organes élastiques peuvent comprendre par exemple une lèvre annulaire formée monobloc avec la paroi principale d'appui, la paroi **12** du deuxième ensemble présentant alors une forme annulaire. L'épaisseur des organes élastique peut aussi être différente de celle de plaque support de la paroi principale d'appui, en fonction des organes élastiques choisis et du procédé de fabrication associé.

L'orientation du porte-capteur dans le dispositif de palier à roulement instrumenté peut aussi être différente, les lamelles élastiques pouvant être en appui contre la bague extérieure et la paroi principale d'appui étant en appui contre la surface d'extrémité axiale du carter rapporté.

## Revendications

1. Porte-capteur (10) monobloc pour un dispositif de palier à roulement instrumenté (100), le porte-capteur (10) présentant une interface de fixation (15) pour supporter un capteur (35) de rotation pour détecter un signal émis par un codeur (25) solidaire d'une partie tournante (20) autour d'un axe de rotation de référence (X) pour la détermination d'au moins un paramètre de rotation, le porte-capteur (10) comprenant un premier ensemble d'une ou plusieurs parois d'appui (11) orientées suivant une direction axiale dans un premier sens (D1) et tangentes à un premier plan de contact (P1) perpendiculaire à la direction axiale, et un deuxième ensemble d'une ou plusieurs parois d'appui (12) orientées suivant la direction axiale dans un deuxième sens (D2), opposé au premier sens (D1), et tangentes à un deuxième plan de contact (P2) perpendiculaire à la direction axiale et parallèle au premier plan (P1), le porte-capteur (10) comprenant au moins un organe élastique (40) de mise en précharge axiale du palier à roulement, ledit organe élastique (40) étant apte à se déformer élastiquement pour permettre un rapprochement du premier plan (P1) et du deuxième plan (P2), le porte-capteur (10) étant **caractérisé en ce qu'**il comporte une jupe annulaire intérieure (13) comprenant l'interface de fixation (15) pour supporter le capteur (35) de rotation.

2. Porte-capteur (10) selon la revendication 1, **caractérisé en ce que** l'organe élastique (40) est configuré pour travailler élastiquement en compression pour appliquer sur le roulement une précharge axiale, comprise de préférence entre 50 et 1000 N.

3. Porte-capteur (10) selon la revendication 1 ou 2, **caractérisé en ce qu'**il comporte une jupe annulaire extérieure (14) configurée pour coopérer avec un alésage intérieur (36) de la partie non tournante (30) de sorte à assurer son alignement axial suivant l'axe de référence (X).

4. Porte-capteur (10) selon la revendication 3, **caractérisé en ce que** l'un au moins des deux ensembles constitués par le premier et le deuxième ensembles d'au moins une paroi d'appui (11, 12) est radialement bordé intérieurement par la jupe annulaire intérieure (13) et/ou bordé extérieurement par la jupe annulaire extérieure (14).

5. Porte-capteur (10) selon l'une quelconque des revendications précédentes, **caractérisé en ce qu'**il comprend au moins un moyen d'indexation angulaire (16) par rapport à la partie non tournante (30), le moyen d'indexation angulaire (16) comportant de préférence au moins une saillie radiale (17) par rapport à la jupe annulaire extérieure (14), par exemple formée à partir d'une découpe de la jupe annulaire extérieure (14).

6. Porte-capteur (10) selon l'une quelconque des revendications précédentes, **caractérisé en ce que** les organes élastiques (40) comprennent des lamelles élastiquement déformables (41), les premier et deuxième ensembles d'au moins une paroi d'appui (11, 12) étant reliés ensemble par les lamelles élastiquement déformables (41).

7. Porte-capteur (10) selon l'une quelconque des revendications précédentes, **caractérisé en ce que** les organes élastiques (40) sont formés à partir d'au moins une déformation et/ou découpe pratiquée dans au moins une paroi d'appui de l'un des deux ensembles de paroi(s) d'appui (11, 12).

8. Porte-capteur (10) selon la revendication 6 et 7, **caractérisé en ce que** les lamelles élastiques (41) sont formées à partir de découpes pratiquées dans une paroi d'appui de l'un des deux ensembles d'au moins une paroi d'appui (11, 12), à partir de laquelle les lamelles élastiques (41) sont chacune solidaire par une base (42), l'autre des deux ensembles d'au moins une paroi d'appui (11, 12) étant constitué par des extrémités distales (43) desdites lamelles élastiques (41), opposées à leurs bases (42).

9. Dispositif de palier à roulement instrumenté (100), comportant :
- une partie tournante (20) comprenant une bague de roulement tournante (21), une partie non tournante (30) comprenant une bague de roulement non tournante (31) et des corps roulants (23) logés dans un volume annulaire (24) entre les deux bagues de roulement (21, 31) et aptes à rouler sur des chemins de roulement (22, 32) annulaires formés sur les deux bagues de roulement (21, 31) de manière à permettre une rotation relative entre les deux bagues de roulement (21, 31) autour d'un axe de référence (X) ;
- un capteur (35) de rotation pour détecter un signal émis par un codeur (25) solidaire de la partie tournante (20) pour la détermination d'au moins un paramètre de rotation ;
- un porte-capteur (10) selon la revendication 1.

10. Dispositif de palier à roulement instrumenté (100) selon la revendication 9, **caractérisé en ce que** le roulement est interposé radialement entre une extrémité d'un arbre (26) tournant et un alésage intérieur (36) de la partie non tournante (30), l'alésage (36) présentant une ouverture extérieure (37) débouchante vers l'extérieur, d'un côté opposé à un côté recevant l'arbre tournant (26).

11. Dispositif de palier à roulement instrumenté (100) selon l'une des revendications 9 ou 10, **caractérisé en ce que** le porte-capteur (10) est interposé axialement entre la bague non tournante (31) et un carter rapporté (38) de la partie non tournante (30), le carter rapporté (38) étant configuré de préférence pour fermer l'ouverture extérieure (37) de l'alésage (36).

12. Dispositif de palier à roulement instrumenté (100) selon l'une des revendications 9 à 11, **caractérisé en ce que** le porte-capteur (10) comprend au moins un moyen d'indexation angulaire (16) par rapport à la partie non tournante (30), de préférence formé par au moins une saillie radiale (17) coopérant dans une rainure axiale (39) de l'alésage (36).

13. Dispositif de palier à roulement instrumenté (100) selon revendication 12, **caractérisé en ce qu'**il comprend un connecteur (35') reliant le capteur (35) à au moins un câble configuré pour être relié à une unité électronique de traitement des signaux, le moyen d'indexation angulaire (16) comprenant le connecteur (35').

14. Dispositif de palier à roulement instrumenté (100) selon l'une des revendications 9 à 13, **caractérisé en ce qu'**il comporte une jupe annulaire intérieure (13) comprenant l'interface de fixation (15) pour supporter le capteur (35), le capteur (35) s'étendant de préférence suivant un secteur angulaire supérieur à 180°.

## Patentansprüche

1. Einteiliger Sensorhalter (10) für eine instrumentierte Wälzlagervorrichtung (100), wobei der Sensorhalter (10) eine Befestigungsschnittstelle (15) vorweist, um einen Rotationssensor (35) zu tragen, um ein Signal zu erfassen, das von einem Codierer (25) ausgegeben wird, der fest mit einem drehenden Teil (20) um eine Referenzrotationsachse (X) für die Bestimmung von mindestens einem Rotationsparameter verbunden ist, der Sensorhalter (10) umfassend eine erste Anordnung von einer oder mehreren Stützwänden (11), die entlang einer axialen Richtung in einer ersten Richtung (D1) ausgerichtet sind und eine erste Kontaktfläche (P1) tangieren, die senkrecht zu der axialen Richtung verläuft, und eine zweite Anordnung von einer oder mehreren Stützwänden (12), die entlang der axialen Richtung in einer zweiten Richtung (D2) ausgerichtet sind, die der ersten Richtung (D1) entgegengesetzt ist, und eine zweite Kontaktfläche (P2) tangieren, die senkrecht zu der axialen Richtung und parallel zu der ersten Fläche (P1) verläuft, der Sensorhalter (10) umfassend mindestens ein elastisches Element (40), um das Wälzlager in eine axiale Vorspannung zu setzen, wobei das elastische Element (40) geeignet ist, sich elastisch zu verformen, um eine Annäherung der ersten (P1) und der zweiten Fläche (P2) zu ermöglichen, wobei der Sensorhalter (10) **dadurch gekennzeichnet ist, dass** er eine innere ringförmige Einfassung (13) aufweist, umfassend die Befestigungsschnittstelle (15), um den Rotationssensor (35) zu tragen.

2. Sensorhalter (10) nach Anspruch 1, **dadurch gekennzeichnet, dass** das elastische Element (40) so ausgeführt ist, dass es unter Kompression elastisch arbeitet, um auf das Lager eine axiale Vorspannung anzuwenden, die bevorzugt zwischen 50 und 1.000 N liegt.

3. Sensorhalter (10) nach Anspruch 1 oder 2,
**dadurch gekennzeichnet, dass** er eine äußere ringförmige Einfassung (14) aufweist, die so ausgeführt ist, dass sie mit einer inneren Bohrung (36) des nicht drehenden Teils (30) so zusammenarbeitet, dass ihre axiale Ausrichtung entlang der Referenzachse (X) gewährleistet wird.

4. Sensorhalter (10) nach Anspruch 3, **dadurch gekennzeichnet, dass** mindestens eine der zwei Anordnungen, die aus der ersten und der zweiten Anordnung mindestens einer Stützwand (11, 12) bestehen, radial innen von der inneren ringförmigen Einfassung (13) umrandet ist und/oder außen von der äußeren ringförmigen Einfassung (14) umrandet ist.

5. Sensorhalter (10) nach einem der vorstehenden Ansprüche,
**dadurch gekennzeichnet, dass** er mindestens ein Winkelindexierungsmittel (16) in Bezug auf den nicht drehenden Teil (30) umfasst, wobei das Winkelindexierungsmittel (16) bevorzugt mindestens einen radialen Vorsprung (17) in Bezug auf die äußere ringförmige Einfassung (14) aufweist, der beispielsweise aus einem Ausschnitt der äußeren ringförmigen Einfassung (14) gebildet wird.

6. Sensorhalter (10) nach einem der vorstehenden Ansprüche,
**dadurch gekennzeichnet, dass** die elastischen Elemente (40) elastisch verformbare Lamellen (41) umfassen, wobei die erste und die zweite Anordnung von mindestens einer Stützwand (11, 12) durch die elastisch verformbaren Lamellen (41) miteinander verbunden sind.

7. Sensorhalter (10) nach einem der vorstehenden Ansprüche,
**dadurch gekennzeichnet, dass** die elastischen Elemente (40) aus mindestens einer Verformung und/oder einem Ausschnitt gebildet sind, die/der in mindestens einer Stützwand einer der zwei Anordnungen von der/den Stützwand/Stützwänden (11, 12) vorgesehen ist.

8. Sensorhalter (10) nach Anspruch 6 und 7, **dadurch**
**gekennzeichnet, dass** die elastischen Lamellen (41) aus Ausschnitten gebildet sind, die in einer Stützwand einer der zwei Anordnungen von mindestens einer Stützwand (11, 12) vorgesehen sind, von welcher ausgehend die elastischen Lamellen (41) jeweils durch eine Grundfläche (42) fest verbunden sind, wobei die andere der zwei Anordnungen von mindestens einer Stützwand (11, 12) aus den distalen Enden (43) der elastischen Lamellen (41), die ihren Grundflächen (42) gegenüberliegen, besteht.

9. Instrumentierte Wälzlagervorrichtung (100), umfassend:
- einen drehenden Teil (20) umfassend einen drehenden Wälzlagerlaufring (21), einen nicht drehenden Teil (30) umfassend einen nicht drehenden Wälzlagerlaufring (31) und Wälzkörper (23), die in einem ringförmigen Volumen (24) zwischen den zwei Wälzlagerlaufringen (21, 31) untergebracht sind und geeignet sind, auf ringförmigen Wälzbahnen (22, 32) abzurollen, die auf den zwei Wälzlagerlaufringen (21, 31) gebildet sind, um eine relative Rotation zwischen den zwei Wälzlagerlaufringen (21, 31) um eine Referenzachse (X) zu ermöglichen;
- einen Rotationssensor (35) zum Erfassen eines Signals, das von einem mit dem drehenden Teil (20) verbundenen Codierer (25) für die Bestimmung von mindestens einem Rotationsparameter ausgegeben wird;
- einen Sensorhalter (10) nach Anspruch 1.

10. Instrumentierte Wälzlagervorrichtung (100) nach Anspruch 9,
**dadurch gekennzeichnet, dass** das Lager radial zwischen einem Ende einer drehenden Welle (26) und einer inneren Bohrung (36) des nicht drehenden Teils (30) dazwischengesetzt ist, wobei die Bohrung (36) eine äußere Öffnung (37) vorweist, die auf einer Seite, die einer Seite gegenüberliegt, die die drehende Welle (26) aufnimmt, nach außen hin ausmündet.

11. Instrumentierte Wälzlagervorrichtung (100) nach einem der Ansprüche 9 oder 10, **dadurch gekennzeichnet, dass** der Sensorhalter (10) axial zwischen dem nicht drehenden Ring (31) und einem Einsatzgehäuse (38) des nicht drehenden Teils (30) dazwischengesetzt ist, wobei das Einsatzgehäuse (38) bevorzugt so ausgeführt ist, dass es die äußere Öffnung (37) der Bohrung (36) schließt.

12. Instrumentierte Wälzlagervorrichtung (100) nach einem der Ansprüche 9 bis 11, **dadurch gekennzeichnet, dass** der Sensorhalter (10) mindestens ein Winkelindexierungsmittel (16) in Bezug auf den nicht drehenden Teil (30) umfasst, das bevorzugt durch mindestens einen radialen Vorsprung (17) gebildet wird, der in einer axialen Nut (39) der Bohrung (36) zusammenarbeitet.

13. Instrumentierte Wälzlagervorrichtung (100) nach Anspruch 12,
**dadurch gekennzeichnet, dass** sie einen Verbinder (35') umfasst, der den Sensor (35) mit mindestens einem Kabel verbindet, das so ausgeführt ist, dass es mit einer elektronischen Signalverarbeitungseinheit verbunden werden kann, wobei das Winkelindexierungsmittel (16) den Verbinder (35') umfasst.

14. Instrumentierte Wälzlagervorrichtung (100) nach einem der Ansprüche 9 bis 13, **dadurch gekennzeichnet, dass** sie eine innere ringförmige Einfassung (13) umfassend die Befestigungsschnittstelle (15) zum Tragen des Sensors (35) aufweist, wobei sich der Sensor (35) bevorzugt entlang eines Winkelsektors von mehr als 180° erstreckt.

## Claims

1. A one-piece sensor holder (10) for an instrumented rolling bearing device (100), the sensor holder (10) having an attachment interface (15) for supporting a rotation sensor (35) for detecting a signal emitted by an encoder (25) secured to a part (20) rotating about a reference axis of rotation (X) for determining at least one rotation parameter, the sensor holder (10) comprising a first set of one or more support walls (11) oriented along an axial direction in a first direction (D1) and tangent to a first contact plane (P1) perpendicular to the axial direction, and a second set of one or more support walls (12) oriented along the axial direction in a second direction (D2), opposite to the first direction (D1), and tangent to a second contact plane (P2) perpendicular to the axial direction and parallel to the first plane (P1), the sensor holder (10) comprising at least one elastic member (40) for axially pre-loading the rolling bearing, said elastic member (40) being able to be deformed elastically to allow a convergence of the first plane (P1) and the second plane (P2), the sensor holder (10) being **characterized in that** it comprises an inner annular skirt (13) comprising the attachment interface (15) for supporting the rotation sensor (35).

2. The sensor holder (10) according to claim 1, **characterized in that** the elastic member (40) is configured to work elastically under compression to apply an axial preload on the bearing, preferably of between 50 and 1000 N.

3. The sensor holder (10) according to claim 1 or 2, **characterized in that** it comprises an outer annular skirt (14) configured to cooperate with an inner bore (36) of the non-rotating portion (30) so as to ensure its axial alignment along the reference axis (X).

4. The sensor holder (10) according to claim 3, **characterized in that** at least one of the two sets consisting of the first and second sets of at least one support wall (11, 12) is radially flanged internally by the inner annular skirt (13) and/or externally flanged by the outer annular skirt (14).

5. The sensor holder (10) according to any one of the preceding claims, **characterized in that** it comprises at least one angular indexing means (16) with respect to the non-rotating part (30), the angular indexing means (16) preferably comprising at least one radial projection (17) relative to the outer annular skirt (14), for example formed from a cutout of the outer annular skirt (14).

6. The sensor holder (10) according to any one of the preceding claims, **characterized in that** the elastic members (40) comprise elastically deformable strips (41), the first and second sets of at least one support wall (11, 12) being connected to one another by the elastically deformable strips (41).

7. The sensor holder (10) according to any one of the preceding claims, **characterized in that** the elastic members (40) are formed from at least one deformation and/or cutout made in at least one support wall of one of the two sets of support wall(s) (11, 12).

8. The sensor holder (10) according to claim 6 and 7, **characterized in that** the elastic strips (41) are formed from cutouts made in a support wall of one of the two sets of at least one support wall (11, 12), from which the elastic strips (41) are each secured by a base (42), the other of the two sets of at least one support wall (11, 12) consisting of distal ends (43) of said elastic strips (41), opposite their bases (42).

9. An instrumented rolling bearing device (100), comprising:
- a rotating part (20) comprising a rotating rolling ring (21), a non-rotating part (30) comprising a non-rotating rolling ring (31) and rolling bodies (23) housed in an annular volume (24) between the two rolling rings (21, 31) and capable of rolling on annular rolling tracks (22, 32) formed on the two rolling rings (21, 31) so as to allow relative rotation between the two rolling rings (21, 31) about a reference axis (X);
- a rotation sensor (35) for detecting a signal emitted by an encoder (25) secured to the rotating part (20) for determining at least one rotation parameter;
- a sensor holder (10) according to claim 1.

10. The instrumented rolling bearing device (100) according to claim 9, **characterized in that** the rolling bearing is interposed radially between one end of a rotating shaft (26) and an inner bore (36) of the non-rotating part (30), the bore (36) having an outer opening (37) emerging outwards, on a side opposite to a side receiving the rotating shaft (26).

11. The instrumented rolling bearing device (100) according to one of claims 9 or 10, **characterized in that** the sensor holder (10) is interposed axially between the non-rotating ring (31) and an attached housing (38) of the non-rotating
part (30), wherein the attached housing (38) is preferably configured to close the outer opening (37) of the bore (36).

12. The instrumented rolling bearing device (100) according to one of claims 9 to 11, **characterized in that** the sensor holder (10) comprises at least one angular indexing means (16) with respect to the non-rotating part (30), preferably formed by at least one radial projection (17) cooperating in an axial groove (39) of the bore (36).

13. The instrumented rolling bearing device (100) according to claim 12, **characterized in that** it comprises a connector (35') connecting the sensor (35) to at least one cable configured to be connected to an electronic signal processing unit, the angular indexing means (16) comprising the connector (35').

14. The instrumented rolling bearing device (100) according to one of claims 9 to 13, **characterized in that** it comprises an inner annular skirt (13) comprising the attachment interface (15) for supporting the sensor (35), the sensor (35) preferably extending along an angular sector greater than 180°.
